# EUROPÄISCHE PATENTSCHRIFT

(11) **EP 1 914 060 B1**
(45) Veröffentlichungstag und Bekanntmachung des Hinweises auf die Patenterteilung: **11.08.2010**
(21) Anmeldenummer: 07015836.5
(22) Anmeldetag: 11.08.2007
(51) Int. Cl.: B29C 47/90, B29C 47/92, B29C 47/22, B29C 47/88

(54) **Vorrichtung zum Extrudieren von Hohlsträngen**
Device for extruding hollow rods
Dispositif destiné à extruder des tiges creuses

(30) Priorität: 18.10.2006 DE 102006049660
(43) Veröffentlichungstag der Anmeldung: 23.04.2008
(73) Patentinhaber: INOEX GmbH, 32547 Bad Oeynhausen (DE)
(72) Erfinder: Diekhaus, Brigitte, 33659 Bielefeld (DE); Schmuhl, Jörg, Dr., 15711 Königs Wusterhausen (DE); Klose, Reinhard, 31737 Rinteln (DE)
(74) Vertreter: Seewald, Jürgen

(56) Entgegenhaltungen:
- DE-A1- 4 135 339
- DE-A1- 10 021 728
- JP-A- 3 026 521
- JP-A- 4 119 818
- JP-A- 2002 264 202
- JP-A- 2004 264 758
- COLVIN R: "OPPORTUNITIES ABOUND IN WATER PIPE REPLACEMENT" MODERN PLASTICS INTERNATIONAL, MCGRAW-HILL,INC. LAUSANNE, CH, Bd. 27, Nr. 11, 1. November 1997 (1997-11-01), Seite 64/65,67, XP000731820 ISSN: 0026-8283

## Beschreibung

Die vorliegende Erfindung betrifft eine Vorrichtung zum Extrudieren von Hohlsträngen aus thermoplastischem Kunststoff gemäß dem Oberbegriff des Anspruchs 1.

In der EP 1 115 551 B1 ist eine Vorrichtung zur Herstellung von Kunststoffrohren beschrieben, bei der zwischen dem Rohrkopf und der Kalibriereinrichtung eine Vakuumkammer angeordnet ist, in die Messvorrichtungen zur Erfassung des Außendurchmessers des Rohres eingebaut sind. Diese Messvorrichtungen steuern in Abhängigkeit von dem gewünschten Rohraußendurchmesser den in der Vakuumkammer herrschenden Unterdruck, d. h., das extrudierte, im plastischen Zustand befindliche Rohr wird auf den gewünschten Außendurchmesser durch Aufsaugen vergrößert. Das Extrusionswerkzeug dieser bekannten Vorrichtung besitzt einen verstellbaren Ringspalt, mit dem in Verbindung mit der Vakuumkammer eine genaue Rohrwanddicke einstellbar ist, die in Abhängigkeit vom Rohraußendurchmesser auch variiert werden kann.

Die DE 202 19 089 U1 beschreibt ebenfalls eine Vorrichtung mit einer zwischen dem Extrusionswerkzeug und der Kalibriereinrichtung vorgesehenen Vakuumkammer. Diese Vakuumkammer entspricht im Wesentlichen der der EP 1 115 551 B1. Im Unterschied dazu ist die Wandung der Vakuumkammer perforiert, so dass ein Kühlmedium durch ihre Wandung hindurch auf die Außenseite des Rohres führbar ist.

In der JP 04 119818 A ist eine Anordnung zur Extrusion von Kunststoffrohren beschrieben. Diese Anordnung besteht u.a. aus einem Extruder mit einem Rohrkopf, aus dessen Ringspaltdüse das heiße, noch verformbare Rohr austritt und mittels eines am Ende der Extrusionslinie angeordneten Abzugs durch eine Kalibrier- und Kühleinheit gezogen wird, die einen Vakuumtank mit einer an dessen Eingang angeordneten Kalibrierhülse aufweist. In der Kalibrierhülse wird das extrudierte, noch formbare Rohr auf den gewünschten Außendurchmesser fixiert. Das aus der Ringspaltdüse des Rohrkopfes austretende Rohr kann über seinen Umfang unterschiedliche Wandstärken haben, was nicht erwünscht ist. In der beschriebenen Anordnung sind daher Vorkehrungen getroffen, um vorhandene Wandstärkenschwankungen des extrudierten Rohres ausgleichen zu können. Dazu gehört eine Stützscheibe, die im Inneren des extrudierten Rohres konzentrisch zur Ringspaltdüse des Rohrkopfes angeordnet ist und einen Durchmesser besitzt, der etwas größer ist als der Innendurchmesser des extrudierten Rohres. Die Stützscheibe ist an einer Stange befestigt, die zentrisch zur Ringspaltdüse vom Rohrkopf in Richtung der Kalibrier- und Kühleinheit abragt. Die Stützscheibe ist im Abstand vom Einlauf der Kalibrierhülse angeordnet. Zur Egalisierung von Wandstärkenschwankungen des extrudierten Rohres kann die Kalibrierhülse zur Ringspaltdüse des Rohrkopfes und damit auch zur Stützscheibe axial versetzt werden.

Die DE 100 21 728 A1 beschreibt ein Extrusionsverfahren zum Herstellen von länglichen Gegenständen. Diese besitzen einen Hohlraum umgrenzenden Mantel, wobei in diesen Hohlraum ein weiterer Werkstoff, z. B. aufgeschäumter Kunststoff zur Ausbildung eines Isolierelementes eingebracht wird. Die Vorrichtung zur Durchführung dieses Verfahrens weist ein Kalibrierwerkzeug für den Mantel des Profils auf, welches bevorzugt schwimmend gelagert ist.

Eine gattungsgemäße Vorrichtung offenbart die DE 20 2004 019 566 U1. Bei dieser Vorrichtung läuft der aus dem Extrusionswerkzeug kommende Hohlstrang in eine Führungskammer ein, die auf Abstandsbolzen befestigte Führungsringe aufweist, deren Innendurchmesser in Extrusionsrichtung kontinuierlich zunimmt. Die Innendurchmesser der Führungsringe bilden dabei definierte Abrisskanten für den Hohlstrang. Der Ausgang der Führungskammer schließt unmittelbar an den Eingang der Kalibriereinrichtung an. Der Hohlstrang wird damit zwischen dem Extrusionswerkzeug und der Kalibriereinrichtung sicher geführt, und letzterer im passenden Format übergeben. Um das Anlegen des Hohlstrangs an die Führungsringe zu unterstützen, kann an die Führungskammer ein Vakuum angelegt werden. Eine Beeinflussung der Wandstärke des aus der Ringspaltdüse des Extrusionswerkzeugs austretenden Hohlstrangs ist mit dieser Führungskammer nicht möglich

Aufgabe der vorliegenden Erfindung ist es, eine gattungsgemäße Vorrichtung zum Extrudieren von Hohlsträngen aus thermoplastischem Kunststoff zur Verfügung zu stellen mit der auch eine Änderung der Wandstärke des aus der Ringspaltdüse austretenden Hohlstrangs möglich ist.

Diese Aufgabe wird erfindungsgemäß mit einer Vorrichtung gelöst, die die Merkmale des Anspruchs 1 aufweist.

Die erfindungsgemäße Vorrichtung ist insbesondere für den Einsatz in Extrusionslinien gedacht, mit denen ein Dimensionswechsel bei laufender Produktion fahrbar ist. Sie ist bei Neuinvestitionen mit Vorteil einsetzbar, aber auch für Nachrüstungen geeignet.

Mit der erfindungsgemäßen Vorrichtung lässt sich der aus der Ringspaltdüse des Extrusionswerkzeugs austretende Hohlstrang nachträglich in seiner Wandstärke und seinem Querschnitt im Sinne einer Vergrößerung bzw. Verkleinerung verändern, so dass bei einer entsprechend ausgerüsteten Extrusionslinie ein Dimensionswechsel bei laufender Produktion möglich ist. Durch axiales und/oder radiales Verstellen von äußerem und innerem Formkörper relativ zueinander wird zwischen ihnen ein veränderbarer Ringspalt gebildet, durch den der extrudierte Hohlstrang in seiner Dimension in Anpassung an die Einstellung der Kalibriereinrichtung beeinflussbar ist.

Weitere vorteilhafte Ausgestaltungen der Erfindung ergeben sich aus den Unteransprüchen.

Die Erfindung wird nachstehend anhand von Ausführungsbeispielen einer Rohrextrusionslinie näher erläutert. In der dazugehörigen Zeichnung zeigt:
- Fig. 1: eine schematische Seitenansicht einer Extrusionslinie,
- Fig. 2: einen vergrößerten schematischen Ausschnitt A gemäß Fig. 1 nach einer ersten Ausführungsform der Erfindung,
- Fig. 3: eine Darstellung der Vorrichtung gemäß Figur 2 in einem ersten Betriebszustand,
- Fig. 4: eine Darstellung der Vorrichtung gemäß Figur 2 in einem zweiten Betriebszustand,
- Fig. 5: einen vergrößerten, schematischen Ausschnitt A gemäß Fig. 1 nach einer zweiten Ausführungsform der Erfindung,
- Fig. 6: eine Darstellung der Vorrichtung gemäß Figur 5 in einem ersten Betriebszustand,
- Fig. 7: eine Darstellung der Vorrichtung gemäß Figur 5 in einem zweiten Betriebszustand,
- Fig. 8: einen vergrößerten, schematischen Ausschnitt A gemäß Fig. 1 nach einer dritten Ausführungsform der Erfindung in einem ersten Betriebszustand,
- Fig. 9: eine Darstellung der Vorrichtung gemäß Figur 8 in einem zweiten Betriebszustand,
- Fig.10: eine vergrößerte schematische Darstellung des äußeren Formkörpers der dritten Ausführungsform,
- Fig. 11: einen vergrößerten, schematischen Ausschnitt (A) gemäß Fig. 1 nach einer vierten Ausführungsform der Erfindung in einem ersten Betriebszustand,
- Fig. 12: eine Darstellung der Vorrichtung gemäß Fig. 11 in einem zweiten Betriebszustand,
- Fig. 13: eine schematische Draufsicht auf den äußeren Formkörper im ersten Betriebszustand, und
- Fig. 14: eine Darstellung gemäß Fig. 13 bei im zweiten Betriebszustand befindlichem äußeren Formkörper.

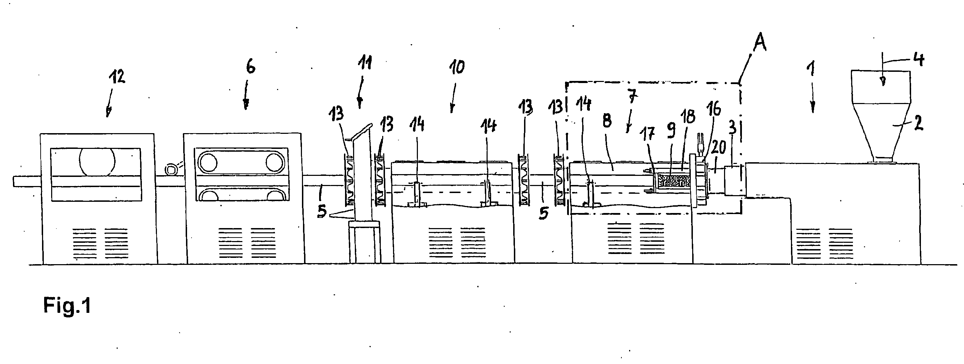

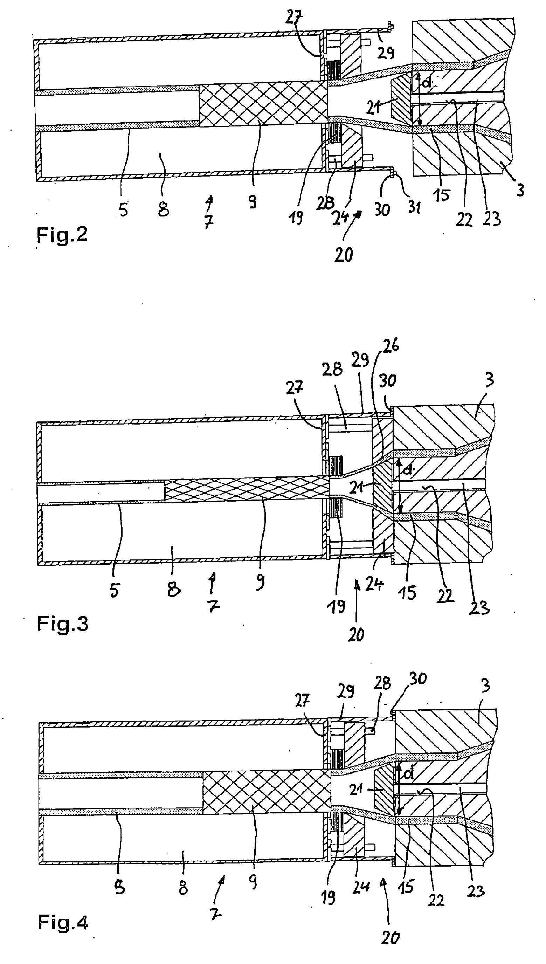

Die in Figur 1 dargestellte Extrusionslinie zur Herstellung von Rohren umfasst eine Extrudereinheit 1 mit einem Aufgabetrichter 2, einer aus der Zeichnung nicht ersichtlichen Extruderschnecke und einem Rohrkopf 3. Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch eine Ringspaltdüse 15 (siehe Fig. 2 bis 9) gedrückt.

Nach dem Austritt aus der Ringspaltdüse 15 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessen Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Außendurchmesser fixiert werden kann. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 11 angeordnet, mit dem der Durchmesser und die Wanddicke des extrudierten Rohres 5 erfasst werden. Dem Raupenabzug 6 schließt sich eine Trennsäge 12 an, in der das Rohr 5 abgelängt wird. Zur Aufrechterhaltung eines Unterdrucks in der Kalibrier- und Kühleinheit 7, der Kühlstrecke 10 und dem Ultraschallscanner 11 sind Dichtungen 13 vorgesehen, die das durchlaufende Rohr 5 abdichtend umschließen.

Da das extrudierte Rohr 5 erst nach Verlassen der Kühlstrecke 10 ausgehärtet, d. h. formstabil ist, muss es zuvor abgestützt werden, um ein Durchhängen und damit Deformieren zu vermeiden. Dazu sind in der Kühlstrecke 10 zwei und in der Kalibrier- und Kühleinheit 7 eine Rohrunterstützung 14 vorgesehen.

Die Kalibrierhülse 9 besitzt einen ringförmigen Einlaufkopf 16 und einen ringförmigen Auslasskopf 17. Während der Einlaufkopf 16 außerhalb des Vakuumtanks 8 angeordnet ist, befindet sich der Auslasskopf 17 im Vakuumtank 8 (Fig. 1). Der Auslasskopf 17 hat einen fixen Innendurchmesser, der mindestens dem größten in der Extrusionsanlage zu fahrenden Rohrdurchmesser entspricht. Er ist gegenüber dem ortsfesten Einlaufkopf 16 in Axialrichtung der Kalibrierhülse 9 verlagerbar, um deren Durchmesser zu ändern. Dazu sind mindestens zwei Spindeleinheiten 18 vorgesehen, deren Gewindespindeln motorisch angetrieben werden.

Der Einlaufkopf 16 weist radial verstellbare Segmente 19 auf (Fig. 2 bis 9), die gleichmäßig auf den Umfang des zu kalibrierenden Rohres 5 angeordnet sind. Zum weiteren Aufbau der Kalibrierhülse 9 wird auf die DE 10 2005 002 820 B3 verwiesen, deren Offenbarungsgehalt hiermit zum Gegenstand dieser Ausführungsbeispiele gemacht wird. Diese Kalibrierhülse 9 ist, so wie die übrigen Ausrüstungen der Extrusionslinie auch, zum Dimensionswechsel bei laufender Produktion geeignet.

Zwischen dem Rohrkopf 3 und der Kalibrierhülse 9 ist eine Formkammer 20 zur Dimensionsbeeinflussung, d. h., der Änderung der Wandstärke und des Durchmessers, des aus der Ringspaltdüse 15 austretenden plastifizierten Rohres 5 vorgesehen, die nachstehend anhand der Figuren 2 bis 10 in Ausführungsbeispielen näher erläutert wird. In diesen schematischen Darstellungen sind von den Verstellvorrichtungen der Kalibrierhülse 9 der Übersicht halber nur Segmente 19 des Einlaufkopfs 16 dargestellt.

Zunächst werden die den Ausführungsbeispielen gemäß den Figuren 2 bis 7 gemeinsamen Merkmale erläutert.

Zur Formkammer 20 gehört ein den inneren Formkörper bildender Formstopfen 21 mit kreisförmigem Querschnitt, der sich in Produktionsrichtung konisch verjüngt und dessen größter Durchmesser dem Innendurchmesser d der Ringspaltdüse 15 entspricht. Der Formstopfen 21 ist koaxial zur Ringspaltdüse 15 angeordnet und in einer zentrischen Bohrung 22 der Ringspaltdüse 15 über eine Haltestange 23 axial verschiebbar geführt. Ein entsprechender Antrieb ist nicht dargestellt.

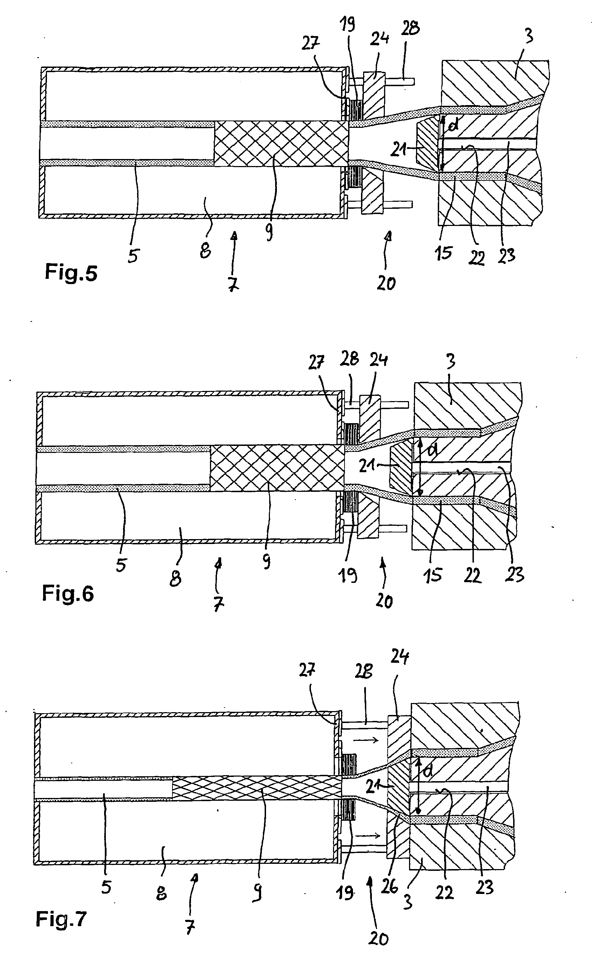

Der Formstopfen 21 arbeitet mit einem den äußeren Formkörper bildenden Formring 24 zusammen, der ebenfalls koaxial zur Ringspaltdüse 15 angeordnet ist. Der Formring 24 besitzt eine sich in Produktionsrichtung verjüngende, starre Öffnung 25. Wenn sich der Formring 24 und der Formstopfen 21 in Überdeckung befinden (Figuren 3, 7), bilden sie zwischen sich einen Ringspalt 26 mit sich in Produktionsrichtung verringerndem Durchmesser und verringernder Spaltweite.

Der Formring 24 ist auf axial von einer Stirnwand 27 des Vakuumtanks 8 abragenden Haltestangen 28 gelagert und über einen nicht dargestellten Antrieb axial auf den Haltestangen 28 verschiebbar.

In dem Ausführungsbeispiel gemäß den Figuren 2 bis 4 ist die Formkammer 20 durch einen ebenfalls an der Stirnwand 27 des Vakuumtanks 8 befestigten Mantel 29 am Umfang geschlossen. An seinem der Stirnwand 27 abgewandeten Ende besitzt der Mantel 29 einen umlaufenden Flanschring 30 mit einer umlaufenden Stirndichtung 31. Zum Schließen der Formkammer 20 wird der Vakuumtank 8 in axialer Richtung verfahren, bis die Stirndichtung 31 dichtend am Rohrkopf 3 anliegt (Fig. 3, 4).

In dem in Figur 3 gezeigten Betriebszustand ist der Formstopfen 21 in Anlage an den Rohrkopf 3 und der Formring 24 in Überdeckung mit dem Formstopfen 21 gefahren worden. Die Kalibrierhülse 9 ist auf ihren kleinsten Durchmesser eingestellt. Mit dieser Einstellung können Rohre 5 mit kleinem Durchmesser und geringer Wandstärke gefahren werden.

In dem Betriebszustand gemäß Figur 4 liegt der Formstopfen 21 immer noch an dem Rohrkopf 3 an, und der Formring 24 ist an die Segmente 19 des Einlaufkopfes 16 der Kalibrierhülse 9 herangefahren. Die Kalibrierhülse 9 ist auf ihren größten Durchmesser eingestellt. In diesem Betriebszustand bleibt der aus der Ringspaltdüse 15 austretende plastifizierte Hohlstrang 5 unbeeinflusst von der Formkammer 20. Mit dieser Einstellung werden Rohre 5 mit großem Durchmesser und großer Wandstärke produziert.

Mit den in den Figuren 3 und 4 gezeigten Betriebszuständen können auch Rohre 5 mit Zwischengrößen (Durchmesser und Wandstärke) gefahren werden, indem der Massedurchsatz durch die Ringspaltdüse 15 des Rohrkopfes 3 und/oder die Abzugsgeschwindigkeit des extrudierten Rohres 5 in der Extrusionslinie koordiniert verändert werden. Die Kalibrierhülse 9 wird dann entsprechend weiter auf- bzw. zugefahren. Zusätzlich oder alternativ dazu kann der Durchmesser und die Wandstärke des produzierten Rohres 5 auch durch axiales Verfahren von Formstopfen 21 und Formring 24 beeinflusst werden. Dadurch ergeben sich optimale Bedingungen für einen Dimensionswechsel bei laufender Produktion.

Aufgrund der im Betriebszustand geschlossenen Ausführung der Formkammer 20 kann in dieser ein Unterdruck erzeugt werden, wodurch die Abdichtung des extrudierten Rohres 5 an den Segmenten 19 des Einlaufkopfes 16 der Kalibrierhülse 9 verbessert wird.

Das Ausführungsbeispiel gemäß den Figuren 5 bis 7 unterscheidet sich von dem vorstehend erläuterten dadurch, dass die Formkammer 20 offen ist, also keine Ummantelung 29 besitzt. Hier kann die Abdichtung zwischen dem extrudierten Rohr 5 und den Segmenten 19 des Einlaufkopfes 16 der Kalibrierhülse 9 durch Einblasen von Stützluft, z. B. durch den Formstopfen 21 hindurch, verbessert werden. Gleichzeitig kann damit ein evtl. auftretender Unterdruck im Rohr 5 kompensiert werden.

In beiden Ausführungsbeispielen können der Formring 24 und der Formstopfen 21 bei Bedarf beheizt werden. Des Weiteren können der Formstopfen 21 und der Formring 24 zumindest an den Berührungsflächen mit dem Rohr 5 eine Oberfläche mit geringem Reibbeiwert besitzen.

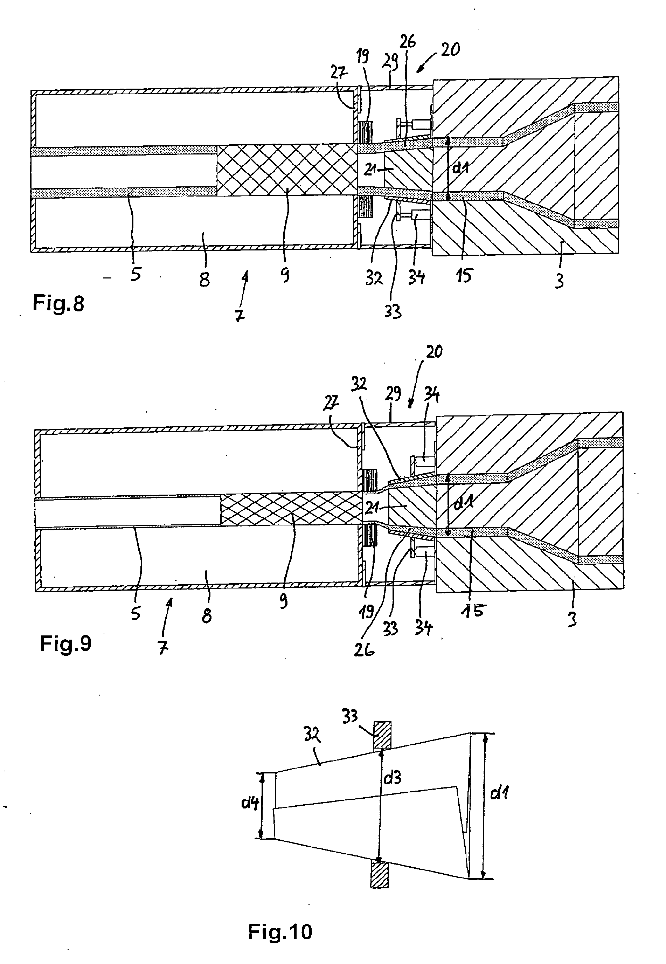

In dem in den Figuren 8 bis 10 dargestellten Ausführungsbeispiel besitzt die Formkammer 20 wie im Ausführungsbeispiel gemäß den Figuren 2 bis 4 ebenfalls wieder eine Umfangswandung 29 um eine geschlossene Ausführung zur Anlegung eines Vakuums zu schaffen. Die Formkammer 20 kann bei diesem Ausführungsbeispiel jedoch auch offen wie bei dem Ausführungsbeispiel gemäß den Figuren 5 bis 7 ausgeführt sein.

Der innere Formkörper ist hier wiederum als Formstopfen 21 mit kreisförmigem, sich in Produktionsrichtung verjüngendem Querschnitt ausgeführt, wobei sein größter, dem Rohrkopf 3 zugewandter Durchmesser dem Innendurchmesser d der Ringspaltdüse 15 entspricht. Der Formstopfen 21 ist in den Figuren 8 und 9 stationär eingezeichnet. Er kann jedoch, wie bei den vorherigen Ausführungsbeispielen auch, axial und/oder radial verstellbar ausgeführt sein. Außerdem kann eine Beheizung des Formstopfens 21 vorgesehen sein.

Der äußere Formkörper ist aus einem dünnen, elastischen Blech gebildet, das derart aufgerollt ist, dass sich ein Konus 32 ergibt, wie am Besten aus Figur 10 zu ersehen ist. Das Material dieses Bleches ist so gewählt, dass der Konus 32 über eine ausreichende Eigensteifigkeit und Rückstellfähigkeit (Elastizität) verfügt. Der Konus 32 verjüngt sich in Produktionsrichtung, wobei sein größter Durchmesser d1 dem Außendurchmesser der Ringspaltdüse 15 entspricht. Der Konus 32 ist an diesem Ende fest eingespannt, so dass sein Durchmesser d1 unveränderbar ist.

Zur Verstellung des Konus 32 ist ein Verstellring 33 mit einem fixen Innendurchmesser d3 vorgesehen. Dieser Verstellring 33 ist an dem Rohrkopf 3 über Führungen 34 gelagert und durch einen nicht dargestellten Antrieb axial verschiebbar.

In dem in Figur 8 gezeigten Betriebszustand ist die Kalibrierhülse 9 auf ihren größten Durchmesser eingestellt und der Verstellring 33 maximal in Produktionsrichtung axial verschoben. Dadurch nimmt der kleinste Durchmesser d4 des Konus 32 seinen größten Wert ein, der im Wesentlichen dem Einlaufdurchmesser der Segmente 19 des Einlaufkopfes 16 der Kalibrierhülse 9 entspricht. Mit dieser Einstellung werden Rohre 5 mit großem Durchmesser und großer Wandstärke gefahren.

In dem Betriebszustand gemäß Figur 9 ist der Verstellring 33 maximal an den Rohrkopf 3 herangefahren worden, so dass der kleinste Durchmesser d4 des Konus 32 seinen kleinsten Wert einnimmt. Dadurch ändern sich gleichzeitig im Sinne einer Verringerung der Durchmesser des extrudierten Rohres 5 und dessen Wandstärke. Bei dem Betriebszustand gemäß Figur 9 werden Rohre mit dem kleinsten Durchmesser gefahren. Entsprechende Zwischenstufen sind durch Änderung der Konizität des Konus 32 fahrbar, wobei die Variabilität des Systems bei axialer und/oder radialer Verstellbarkeit des Formstopfens 21 noch erhöht wird.

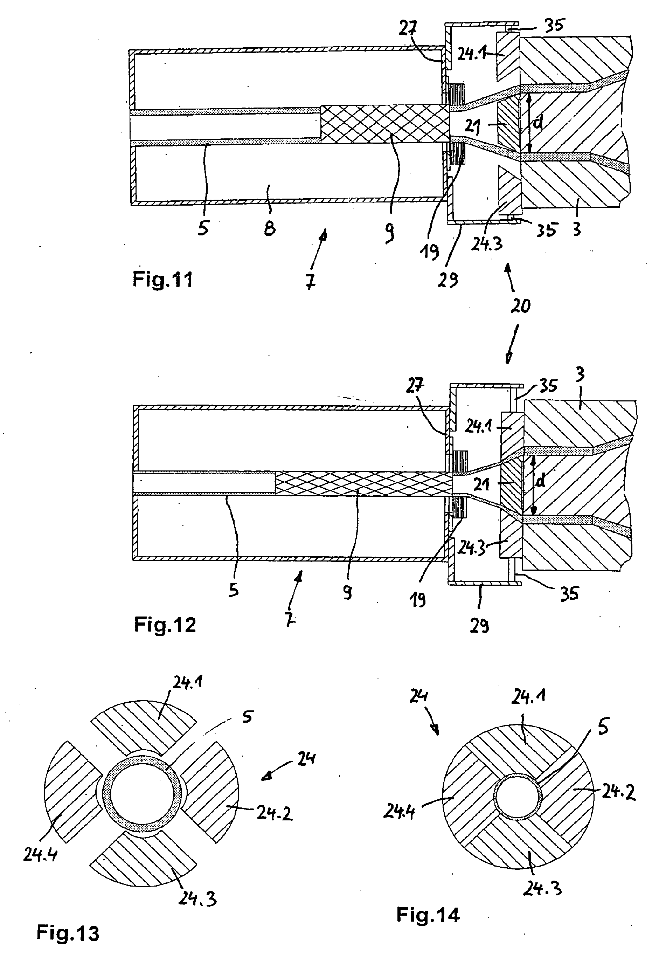

In dem in den Fig. 11 bis 14 dargestellten Ausführungsbeispiel besitzt die Formkammer 20 zwar eine Umfangswandung 29, ist aber nicht geschlossen. Die Formkammer 20 kann bei diesem Ausführungsbeispiel jedoch auch geschlossen ausgeführt sein, wie bei den Ausführungsbeispielen gemäß den Fig. 2 bis 4 bzw. 8 bis 10.

Der innere Formkörper ist hier wiederum als Formstopfen 21 mit kreisförmigem, sich in Produktionsrichtung verjüngendem Querschnitt ausgeführt, wobei sein größter, dem Rohrkopf 3 zugewandter Durchmesser dem Innendurchmesser d der Ringspaltdüse 15 entspricht. Der Formstopfen 21 ist stationär am Rohrkopf 3 befestigt.

Der Formstopfen 21 arbeitet auch bei diesem Ausführungsbeispiel mit einem den äußeren Formkörper bildenden Formring 24 zusammen, welcher ebenfalls koaxial zur Ringspaltdüse 15 angeordnet ist. Er besteht aus vier Segmenten 24.1 bis 24.4, die auf von dem Mantel 29 der Formkammer 20 nach innen abragenden Haltestangen 35 über einen nicht dargestellten Antrieb radial verstellbar sind.

In diesem Ausführungsbeispiel sind die vier Segmente 24.1 bis 24.4 des Formrings 24 identisch ausgeführt. Das ist jedoch nicht erforderlich. Ebenso können die Teile des Formrings 24 unterschiedlich ausgeführt und aus weniger oder mehr als vier Teilen zusammengesetzt sein. Wesentlich ist, dass bei radial zusammen gefahrenen Einzelteilen des Formrings 24, wie in Fig. 14 beispielhaft dargestellt ist, zwischen dem Formring 24 und dem Formstopfen 21 ein Ringspalt 26 mit sich in Produktionsrichtung verringerndem Durchmesser und verringernder Spaltweite gebildet ist.

In dem in den Fig. 11 und 13 gezeigten Betriebszustand sind die Segmente 24.1 bis 24.4 des Formrings 24 radial auseinander gefahren und die Kalibrierhülse 9 ist auf ihren größten Durchmesser eingestellt. In diesem Betriebszustand bleibt der aus der Ringspaltdüse 15 austretende plastifizierte Hohlstrang 5 unbeeinflusst von der Formkammer 20. Mit dieser Einstellung werden Rohre 5 mit großem Durchmesser und großer Wandstärke produziert.

In dem Betriebszustand gemäß den Fig. 12 und 14 sind die Segmente 24.1 bis 24.4 des Formrings 24 radial zusammen gefahren worden, so dass sich zwischen dem Formring 24 und dem Formstopfen 21 ein sich verjüngender Durchtrittsspalt für den plastifizierten Hohlstrang 5 ergibt. Die Kalibrierhülse 9 ist auf ihren kleinsten Durchmesser eingestellt. Mit dieser Einstellung können Rohre 5 mit kleinem Durchmesser und geringer Wandstärke gefahren werden.

## Patentansprüche

1. Vorrichtung zum Extrudieren von Hohlsträngen aus thermoplastischem Kunststoff mit einem Extrusionswerkzeug (3) und einer Kalibriereinrichtung (9) zwischen denen eine Formkammer (20) mit einem äußeren Formkörper (24) zur Beeinflussung des Durchmessers eines aus einer Ringspaltdüse (15) des Extrusionswerkzeugs (3) austretenden heißen, noch formbaren Hohlstranges (5) angeordnet ist, **dadurch gekennzeichnet, dass** die Formkammer (20) einen inneren Formkörper (21) aufweist, wobei innerer und äußerer Formkörper (21; 24, 32) koaxial zur Ringspaltdüse (15) angeordnet sind und durch axiales und/oder radiales Verstellen relativ zueinander zwischen sich einen Ringspalt (26) zur Änderung des Querschnitts und/oder der Wandstärke des aus der Ringspaltdüse (15) austretenden Hohlstranges (5) bilden.

2. Vorrichtung nach Anspruch 1, **dadurch gekennzeichnet, dass** der innere Formkörper (21) und/oder der äußere Formkörper (24, 32) beheizbar sind.

3. Vorrichtung nach Anspruch 1 oder 2, **dadurch gekennzeichnet, dass** die Formkammer (20) geschlossen und mit einem Vakuum beaufschlagbar ist.

4. Vorrichtung nach Anspruch 1 oder 2, **dadurch gekennzeichnet, dass** die Formkammer (20) Mittel zum Einblasen von Stützluft in das extrudierte Rohr (5) aufweist.

5. Vorrichtung nach einem der vorstehenden Ansprüche, **dadurch gekennzeichnet, dass** der innere Formkörper (21) und/oder der äußere Formkörper (24, 32) eine Oberfläche mit geringem Reibbeiwert besitzen.

6. Vorrichtung nach einem der vorstehenden Ansprüche, **dadurch gekennzeichnet, dass** der innere Formkörper ein Formstopfen (21) mit sich in Produktionsrichtung verjüngendem Querschnitt ist.

7. Vorrichtung nach einem der vorstehenden Ansprüche, **dadurch gekennzeichnet, dass** der äußere Formkörper ein Formring (24) mit einer sich in Produktionsrichtung verjüngenden Öffnung (26) ist.

8. Vorrichtung nach einem der vorstehenden Ansprüche, **dadurch gekennzeichnet, dass** der äußere Formkörper ein durch Aufrollen eines dünnen elastischen Blechs gebildeter Konus (32) ist, dessen größter Durchmesser (d1) radial und axial fixiert ist und dessen kleinster Durchmesser (d4) radial verstellbar ist.

9. Vorrichtung nach Anspruch 8, **dadurch gekennzeichnet, dass** ein am Außenumfang des Konus (32) anliegender Verstellring (33) vorgesehen ist, durch dessen axiale Verstellung eine Änderung der Konizität des Konus (32) erreichbar ist.

10. Vorrichtung nach einem der vorstehenden Ansprüche, **dadurch gekennzeichnet, dass** die Formkammer (20) am Vakuumtank (8) festgelegt und gemeinsam mit diesem auf das Extrusionswerkzeug (3) zustellbar ist.

## Claims

1. Device for extruding tubes from thermoplastic material, comprising an extrusion tool (3) and a metering mechanism (9) between which a die chamber (20) having an outer die part (24) is arranged for adjusting the diameter of a hot and still ductile tube (5) leaving an annular gap nozzle (15) of the extrusion tool (3), **characterised in that** the die chamber (20) exhibits an inner die part (21), wherein the inner and outer die parts (21, 24, 32) are arranged coaxially to the annular gap nozzle (15) and they form an annular gap (26) through axial and / or radial adjustment relative to one another. This gap serves for the adjustment of the cross-section and / or wall thickness of the tube (5) leaving the annular gap nozzle (15).

2. Device according to claim 1, **characterised in that** the inner die part (21) and / or the outer die parts (24, 32) are heatable.

3. Device according to claim 1 or 2, **characterised in that** the die chamber (20) is sealed and can be applied with vacuum.

4. Device according to claim 1 or 2, **characterised in that** the die chamber (20) exhibits means for blowing process air into the extruded pipe (5).

5. Device according to one of the preceding claims, **characterised in that** the inner die part (21) and / or the outer die parts (24, 32) possess a surface with low friction coefficient.

6. Device according to one of the preceding claims, **characterised in that** the inner die part (21) is a die block (21) with a cross-section tapering along the direction of extrusion.

7. Device according to one of the preceding claims, **characterised in that** the outer die part (24) is ring-shaped with an annular gap (26) tapering along the direction of extrusion.

8. Device according to one of the preceding claims, **characterised in that** the outer die part resembles a truncated cone (32), which is formed by rolling up a thin elastic sheet, whose base diameter (d1) is constant along the radial and axial directions and whose tip diameter (d4) is adjustable along the radial direction.

9. Device according to claim 8, **characterised in that** an adjustment ring (33), which adjoins the outer surface of the cone (32) and whose axial displacement can alter the conicity of the cone (32), is intended.

10. Device according to one of the preceding claims, **characterised in that** the die chamber (20) is stably attached to the vacuum tank (8) to form a single unit that can be connected to the extrusion tool (3).

## Revendications

1. Dispositif pour l'extrusion de corps creux en matériau thermoplastique avec un outil d'extrusion (3) et un dispositif d'étalonnage (9) entre lesquels est disposée une chambre de moulage (20) avec un corps de moulage extérieur (24) pour influencer le diamètre d'un produit creux (5) chaud encore façonnable sortant d'une buse à interstice annulaire (15) de l'outil d'extrusion (3), **caractérisé en ce que** la chambre de moulage (20) présente un corps de moulage intérieur (21), des corps de moulage intérieurs et extérieurs (21 ; 24, 32) étant disposés coaxialement par rapport à la buse à interstice annulaire (15) et formant, par le déplacement axial et/ou radial réciproque entre eux, un interstice annulaire (26) pour la modification de la section et/ou de l'épaisseur de paroi du corps creux (5) sortant de la buse à interstice annulaire (15).

2. Dispositif selon la revendication 1, **caractérisé en ce que** le corps de moulage intérieur (21) et/ou le corps de moulage extérieur (24, 32) peuvent être chauffés.

3. Dispositif selon la revendication 1 ou 2, **caractérisé en ce que** la chambre de moulage (20) est fermée et peut être mise sous vide.

4. Dispositif selon la revendication 1 ou 2, **caractérisé en ce que** la chambre de moulage (20) présente des moyens pour le soufflage d'air de support dans le tube extrudé (5).

5. Dispositif selon l'une quelconque des revendications précédentes, **caractérisé en ce que** le corps de moulage intérieur (21) et/ou le corps de moulage extérieur (24, 32) présentent une surface à faible coefficient de friction.

6. Dispositif selon l'une quelconque des revendications précédentes, **caractérisé en ce que** le corps de moulage intérieur est un bouchon de moulage (21) avec une section se rétrécissant dans le sens de production.

7. Dispositif selon l'une quelconque des revendications précédentes, **caractérisé en ce que** le corps de moulage extérieur est une bague de moulage (24) avec une ouverture (26) se rétrécissant dans le sens de production.

8. Dispositif selon l'une quelconque des revendications précédentes, **caractérisé en ce que** le corps de moulage extérieur est un cône (32), formé par l'enroulement d'une tôle élastique mince, dont le diamètre le plus grand (d1) est fixé radialement et axialement et dont le diamètre le plus petit (d4) est réglable radialement.

9. Dispositif selon la revendication 8, **caractérisé en ce qu'**une bague de réglage (33) en appuis sur la circonférence extérieure du cône (32) est prévue grâce au déplacement axial de laquelle une modification de la conicité du cône (32) peut être atteinte.

10. Dispositif selon l'une quelconque des revendications précédentes, **caractérisé en ce que** la chambre de moulage (2) est fermement fixée au réservoir de vide (8) et qu'avec celui-ci, elle peut être amenée sur l'outil d'extrusion (3).
